# DEMANDE DE BREVET EUROPEEN

(11) **EP 4 241 566 A1**
(43) Date de publication de la demande: **13.09.2023**
(21) Numéro de dépôt: 23160393.7
(22) Date de dépôt: 07.03.2023
(51) Int. Cl.: A21D 6/00, A21D 10/02, A21D 13/16, A21D 13/17, A21D 15/02

(54) **PROCEDE DE PREPARATION DE PATE FEUILLETEE LEVEE FRAICHE**

(30) Priorité: 08.03.2022 FR 2201996
(71) Demandeur: Cérélia, 62800 Lievin (FR)
(72) Inventeur: FRITSCH, Gérard, 67450 Mundolsheim (FR); RAOUF, Roshan, 60700 Pont-Ste-Maxence (FR); POIRETTE, Claire, 59890 Quesnoy sur Deule (FR)
(74) Mandataire: Ipsilon

(57) **Abrégé**

Procédé de préparation de pâte feuilletée levée fraîche, comportant les étapes de :
a) mélange des produits de base,
b) préparation de la détrempe,
c) laminage,
d) inclusion de matière grasse,
e) tourage,
f) découpage de la pâte en quadrilatères,
g) façonnage du quadrilatère de pâte,
h) mise à température de réfrigération,
i) conservation à température de réfrigération,
et, entre les étapes g) et h), comportant les étapes de :
j) solidification par le froid à température négative supérieure à la température de cristallisation de la pâte,
k) huilage et/ou mise de la pâte en conditionnement sous vide.

## Description

La présente invention concerne un procédé de préparation de pâte feuilletée levée fraîche et une viennoiserie fraîche réalisée selon ledit procédé.

L'expression pâte feuilletée levée fraîche signifie que la pâte feuilletée levée ne passe pas, pour sa conservation de longue durée, par une étape de surgélation.

L'expression viennoiserie couvre les produits comportant une mise en volume, tels que, par exemple, les croissants et les produits fourrés de type pain au chocolat ou roulé à la cannelle.

Le procédé connu de préparation de pâte feuilletée levée fraîche comprend les étapes usuelles de : mélange des produits de base, préparation de la détrempe, laminage, inclusion de matière grasse, tourage, découpage de la pâte en rectangles, mise du rectangle de pâte en rouleau dans une boîte en complexe carton-aluminium-plastique et conservation à température de réfrigération inférieure à 8°C.

Au moment de la consommation, le rectangle de pâte est déroulé et découpé en portions individuelles, chaque portion individuelle étant mise en forme et cuite au four. Dans le cas où la viennoiserie est un croissant, les portions individuelles sont triangulaires et elles sont roulées avant cuisson. Après cuisson, elles présentent en général une texture plutôt briochée que feuilletée.

L'un des buts de l'invention est de proposer une pâte feuilletée levée fraîche aux qualités organoleptiques supérieures à celles de la pâte à viennoiseries en boîte.

Un autre but de l'invention est de proposer un conditionnement de la pâte feuilletée levée fraîche lui assurant une conservation optimale de longue durée.

L'invention a pour objet un procédé de préparation de pâte feuilletée levée fraîche, comportant les étapes de :
a) mélange des produits de base ;
b) préparation de la détrempe ;
c) laminage ;
d) inclusion de matière grasse ;
e) tourage ;
f) découpage de la pâte en quadrilatères ;
g) façonnage du quadrilatère ;
h) mise à température de réfrigération ;
i) conservation à température de réfrigération,
   caractérisé en ce que, entre les étapes g) et h), il comporte les étapes de :
j) solidification par le froid à température négative supérieure à la température de cristallisation de la pâte,
k) huilage et/ou mise de la pâte en conditionnement sous vide.

Selon un mode de réalisation, le procédé comporte les deux étapes de
l) découpage du quadrilatère de pâte en portions individuelles,
m) mise en forme de viennoiserie, de la portion individuelle.

Selon un mode de réalisation, les étapes l) et m) se déroulent entre les étapes g) de façonnage du quadrilatère, et j) de solidification par le froid.

Selon un mode de réalisation, les étapes l) et m) se déroulent après l'étape i) de conservation à température de réfrigération.

L'invention a aussi pour objet une viennoiserie fraîche réalisée selon le procédé décrit ci-dessus.

L'invention est décrite ci-après en relation avec une recette de pâte levée feuilletée, comprenant en pourcentage en poids de la pâte :

| | |
|---|---|
| - farine | 30-35 |
| - gluten | < 5 |
| - sucre | 2-10 |
| - sel | < 2 |
| - stabilisant | < 1 |
| - matière grasse dans la détrempe | 5-10 |
| - poudres levantes | < 3 |
| - eau | 15-20 |
| - conservateur | < 3 |
| - matière grasse dans le tourage | 20-30 |

Le stabilisant participe à une meilleure intégrité de la pâte au cours d'étapes du procédé de préparation comme le refroidissement au-dessus de la température de cristallisation de la pâte, la mise sous vide, et le retour à température de réfrigération, entre 0°C et + 8°C. Il assure la stabilisation de la pâte pendant sa durée de vie à cru, et la conservation de la forme et du feuilletage de la pâte. Il assure une meilleure rétention du dioxyde de carbone dans la pâte, et un meilleur développement de la viennoiserie à la cuisson. Le stabilisant est de préférence une gomme de xanthane ou de guar, ou un autre hydrocolloïde.

Les poudres levantes contiennent avantageusement du bicarbonate de potassium ou de sodium, et du glucono-delta-lactone et des diphosphates.

Le conservateur assure l'obtention d'une pâte stable et saine d'un point de vue sécurité alimentaire/microbiologique pendant sa durée de vie, entre 0 et 8°C. Avantageusement, il est constitué par un alcool et/ou des acides organiques ou leurs sels, des agents biologiques, ou un ingrédient contenant des molécules à effet conservateur comme de la farine fermentée.

La matière grasse est utilisée à la fois dans la détrempe et dans le tourage. Les proportions décrites assurent un traitement mécanique facile de la pâte et une qualité de feuilletage élevée. La matière grasse est avantageusement une matière grasse végétale seule, ou un mélange de plusieurs matières grasses, ou du beurre seul.

La recette décrite ci-dessus peut avantageusement être complétée par un arôme lié à l'univers des viennoiseries ; par un améliorant de panification ou de meunerie (en proportion < 1%), tel qu'acide ascorbique, enzyme(s), émulsifiant(s), apportant une meilleure stabilité de la pâte au cours du procédé de préparation ; par une poudre de lait (0-4%) qui apporte du goût et une coloration supplémentaire à la viennoiserie cuite.

Le procédé de préparation de pâte feuilletée levée fraîche correspondant, par exemple, à la recette précitée, comprend une succession d'étapes classiques et des étapes nouvelles et non évidentes.

Les étapes classiques sont :
a) le mélange des produits de base,
b) la préparation de la détrempe qui forme la base de la pâte,
c) un laminage,
d) l'inclusion de matière grasse,
e) le tourage, consistant à plier, abaisser et tourner plusieurs fois la pâte pour former des plis superposés enfermant la matière grasse entre les couches de détrempe,
f) le découpage de la pâte en quadrilatères, par exemple en rectangles,
g) le façonnage des quadrilatères, en vue de leur conditionnement,
h) la mise à température de réfrigération, et
i) la conservation à température de réfrigération.

Les étapes nouvelles sont :
j) solidification par le froid à température négative supérieure à la température de cristallisation de la pâte ;
k) huilage et/ou mise de la pâte en conditionnement sous vide ;
l) découpage du quadrilatère de pâte en portions individuelles ;
m) mise en forme de viennoiserie, de la portion individuelle.

L'expression mise en forme de viennoiserie correspond par exemple au roulage pour les croissants ou au fourrage pour les pains au chocolat ou les roulés à la cannelle.

Selon un mode de réalisation de l'invention, après les étapes a) à g) les étapes nouvelles sont insérées dans l'ordre :
l) découpage du quadrilatère de pâte en portions individuelles ;
m) mise en forme de viennoiserie, de la portion individuelle ;
j) solidification par le froid à température négative supérieure à la température de cristallisation de la pâte ;
k) huilage et/ou mise en conditionnement sous vide de la pâte solidifiée par le froid.

Ainsi, la portion individuelle de pâte, mise en forme de viennoiserie, est conservée sous vide, à température de réfrigération, dans un emballage barrière, par exemple un film plastique, et ensuite dans un emballage adéquat de manipulation et de transport tel que par exemple, une boîte en carton.

La solidification par le froid, à une température négative supérieure à la température de cristallisation de la pâte assure une stabilité de la forme de la viennoiserie fraîche pour sa mise sous vide.

La mise sous vide assure la fixation de la qualité rhéologique caractéristique de la pâte feuilletée crue, sans passer par la surgélation.

Selon un autre mode de réalisation, après les étapes a) à g), sont insérées les nouvelles étapes :
j) solidification par le froid à température négative supérieure à la température de cristallisation de la pâte,
k) huilage et/ou mise en conditionnement sous vide de la pâte solidifiée par le froid.

Ensuite, après les étapes classiques h) et i), interviennent les étapes nouvelles :
l) découpe du rectangle de pâte en portions individuelles ; et
m) mise en forme de viennoiserie, de la portion individuelle, avant cuisson au four.

Le procédé de préparation de pâte feuilletée levée fraîche selon l'invention assure aux viennoiseries :
- une qualité d'emballage sous vide assurant une conservation longue, supérieure à 30 jours, avec des caractéristiques organoleptiques de qualité supérieure, proches de celles des viennoiseries artisanales, et
- dans l'un des modes de réalisation, un format de viennoiseries individuelles déjà pré-roulées pour les croissants, ou pré-fourrées pour les pains au chocolat ou les roulés à la cannelle, par exemple.

## Revendications

1. Procédé de préparation de pâte feuilletée levée fraîche, comportant les étapes de :
a) mélange des produits de base,
b) préparation de la détrempe,
c) laminage,
d) inclusion de matière grasse,
e) tourage,
f) découpage de la pâte en quadrilatères,
g) façonnage du quadrilatère de pâte,
h) mise à température de réfrigération,
i) conservation à température de réfrigération,
**caractérisé en ce que**, entre les étapes g) et h), il comporte les étapes de :
j) solidification par le froid à température négative supérieure à la température de cristallisation de la pâte,
k) huilage et/ou mise de la pâte en conditionnement sous vide.

2. Procédé de préparation selon la revendication 1 **caractérisé en ce qu'**il comporte les deux étapes de :
l) découpage du quadrilatère de pâte en portions individuelles, et
m) mise en forme de viennoiserie, de la portion individuelle.

3. Procédé de préparation selon la revendication 2 **caractérisé en ce que** les étapes l) et m) se déroulent entre les étapes g) de façonnage du quadrilatère de pâte, et j) de solidification par le froid.

4. Procédé de préparation selon la revendication 2 **caractérisé en ce que** les étapes l) et m) se déroulent après l'étape i) de conservation à température de réfrigération.
